# EUROPÄISCHE PATENTANMELDUNG

(11) **EP 1 457 797 A1**
(43) Veröffentlichungstag der Anmeldung: **15.09.2004**
(21) Anmeldenummer: 04005231.8
(22) Anmeldetag: 05.03.2004
(51) Int. Cl.: G02B 6/38

(54) **Ferrule**

(30) Priorität: 11.03.2003 DE 20303848 U
(71) Anmelder: Reichle & De-Massari AG, 8622 Wetzikon (CH)
(72) Erfinder: Reichle, Martin, 8620 Wetzikon (CH)
(74) Vertreter: Felber, Josef

(57) **Zusammenfassung**

Eine Ferrule (1), welche im Bereich seiner Ferrulenbasis (3) ein Innengewinde (4) aufweist, um die Ferrule direkt auf einen Mantel (9) eines Lichtwellenleiterkabels, insbesondere mit einer Kunststofffaser (POF), aufzuschrauben. Damit wird eine formschlüssige Verbindung zwischen Lichtwellenleiterkabel und Ferrule (1) hergestellt. Diese formschlüssige Verbindung ist stessfrei und lösbar.

## Beschreibung

Die vorliegende Erfindung betrifft eine Ferrule zur Aufnahme eines Lichtwellenleiterkabels gemäss Oberbegriff des Anspruchs 1.

Ferrulen sind hochpräzise mechanische Führungsröhrchen für die Aufnahme optischer Fasern, wie sie für die moderne Datenübertragung mittels Lichtwellenleitern und in dazu geeigneten Steckern verwendet werden. Diese Ferrulen sind in der Regel aus einem Material mit einem hohen Härtegrad gefertigt, z.B. aus verchromtem Metall, Hartmetall, Keramik oder Kunststoff, und zeichnen sich durch äusserst geringe Fertigungstoleranzen aus. Kleinste Toleranzabweichungen innerhalb der Ferrule haben eine unmittelbare Auswirkung auf den koaxialen Versatz der zu koppelnden Lichtwellenleiter und damit auf die Einkopplungsdämpfung der zu übertragenden Signale. Darüber hinaus soll die Rundheit der Führungsbohrung innerhalb der Ferrule eine hohe Genauigkeit aufweisen (wenige µm), um die in dieser Bohrung geführte Faser nicht zu quetschen. Der Durchmesser des Bohrloches hängt vom Typ (Dimension) des verwendeten Lichtwellenleiters ab. So weisen typische Glasfasern einen Durchmesser von 125 bis 600 µm auf, währenddem typische Kunststofffasern einen Durchmesser von ca. 1 mm aufweisen.

Derartige Ferrulen sind beispielsweise aus der EP 1 180 248 bekannt. Diese Druckschrift offenbart eine Ferrule, welche aus einem transparenten Kunststoff gefertigt ist und mittels einer Laserverschweissung an der Berührungsfläche zwischen Ferrule und Lichtwellenleitermantel am Lichtwellenleiter befestigt wird. Es versteht sich, dass sich eine derartige Befestigungsweise nur sehr schlecht bei der Montage vor Ort durchführen lässt.

Eine Ferrule, welche in einer einfachereren Weise an einer Kunststofffaser (plastic optical fiber, POF) fixiert werden kann, ist in der US 6,517,255 beschrieben. Bei dieser Ferrule wird das faserseitige Ende durch eine geeignete Deformation in kraftschlüssigen Kontakt mit der Faser gebracht. Diese Verbindungsweise führt bei unsachgemässer Montage zur Stressbildung in der Faser und schliesst eine Wiederverwendung der Ferrule aus, wie dies auch bei einer Verklebung von Faser und Ferrule der Fall ist.

Es wurde deshalb mit der DE 197 06 927 vorgeschlagen, eine Ferrule zu verwenden, welche aus lösbaren Klemmverbindungen besteht. Mit dieser Ferrule werden die Nachteile der herkömmlichen Ferrulen überwunden, insbesondere werden keine speziellen Werkzeuge benötigt oder brauchen keine Kleber, Mischhilfen dafür, Spritzen zum Befüllen, Heizboxen zum Aushärten der Kleber oder Crimpzangen und andere Pressvorrichtungen zur plastischen Verformung der Ferrulen eingesetzt werden. Darüber hinaus lassen sich diese Ferrulen ohne weiteres wieder verwenden. Leider erweisen sich diese mehrteiligen Ferrulen als aufwendig in der Herstellung und umständlich bei der Montage vor Ort.

Es ist deshalb Aufgabe der vorliegenden Erfindung, eine Ferrule zu schaffen, welche die Nachteile der bekannten Ferrulen nicht aufweist und insbesondere wiederverwendbar ist und sich in einfacher Weise und ohne spezielle Werkzeuge oder Montagehilfen montieren lässt.

Diese Aufgabe wird erfindungsgemäss durch eine Ferrule mit den Merkmalen des Anspruchs 1 gelöst und insbesondere durch eine Ferrule, welche auf den Mantel der optischen Faser aufschraubbar ist. Weitere vorteilhafte Ausführungsformen der erfindungsgemässen Ferrule weisen die Merkmale der Unteransprüche auf.

Im folgenden soll die Erfindung mit Hilfe der Figuren und anhand eines Ausführungsbeispieles näher beschrieben werden. Es zeigen:
- Fig. 1: Querschnitt durch eine erfindungsgemässe Ferrule;
- Fig. 2: Räumliche Darstellung eines Verbindungsstücks für die Aufnahme erfindungsgemässer Ferrulen

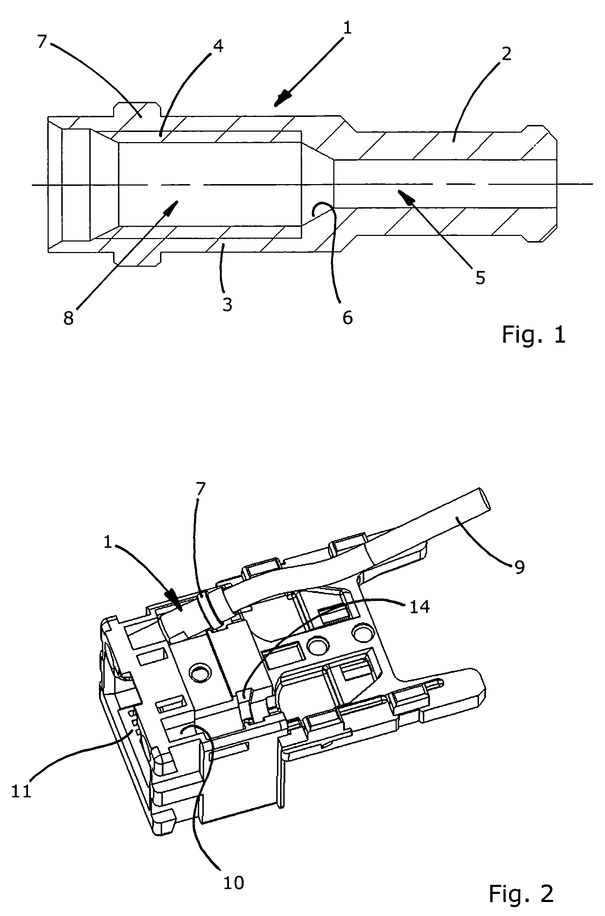

Die in Figur 1 dargestellte Ferrule 1 weist kabelseitig eine Ferrulenbasis 3 auf, in welche ein Lichtwellenleiterkabel, insbesondere ein optisches Faserkabel aus Kunststoff (POF), eingeführt werden kann. In einem Mantelbereich 8 der Ferrulenbasis 3 ist ein Innengewinde 4 vorgesehen, welches bei der Montage direkt auf einen Mantel 9 des Lichtwellenleiterkabels aufgeschraubt wird. Damit kann eine formschlüssige Verbindung zwischen dem Mantel des Lichtwellenleiters und der Ferrule 1 erzeugt werden. Vor der Montage wird das Lichtwellenleiterkabel vom Fasermantel befreit, um den Lichtwellenleiter, respektive die optische Faser freizulegen. Beim Aufschrauben der erfindungsgemässen Ferrule 1 wird die freigelegte optische Faser in eine Führungsbohrung 5 eines Ferrulenkopfes 2 geführt, bis das Ende der freigelegten optischen Faser aus dem faserseitigen Ende der Ferrule 1 herausragt. Diese Führungsbohrung 5 dient der exakten Faserführung und verhindert einen radialen Versatz der Faser, respektive hält diesen in vertretbaren Grenzen. Das überstehende Faserende kann in einfacher und bekannter Weise geschnitten, geschliffen und poliert werden. Dies führt gewöhnlich dazu, dass das Faserende mit dem faserseitigen Ende des Ferrulenkopfes 2 bündig ist.

In einer bevorzugten Ausführungsform der erfindungsgemässen Ferrule ist zwischen dem Innengewinde 4 und der Führungsbohrung 5 ein Innenkonus 6 vorgesehen, um die freigelegte optische Faser in einfacher Weise in die Führungsbohrung 5 zu führen. Darüber hinaus weist die erfindungsgemässe Ferrule 1 mindestens ein Rastelement 7 auf, um die Ferrule 1 in einem Verbindungsstück 11 oder einem Stecker genau zu positionieren. Mit diesem Rastelement 7 kann ein longitudinaler Versatz der Ferrule, und damit auch der optischen Faser verhindert werden, und kann insbesondere die longitudinale Beabstandung von sich gegenüber liegenden Ferrulen in vorgesehener Weise bestimmt werden.

Figur 2 zeigt die Verwendung der erfindungsgemässen Ferrule 1 in einem Verbindungsstück 11. Dieses Verbindungsstück 11 weist Ausnehmungen 10 auf, in welche die erfindungsgemässen Ferrulen eingeführt werden können. Um die Stirnflächen der optischen Fasern in vorbestimmter Weise positionieren zu können, sind die Ausnehmungen 10 mit Aussparungen 14 versehen, in welche die Rastelemente 7 der Ferrule 1 eingreifen. Es versteht sich, dass die Gestaltung dieser Positioniermittel 7, 14 im Bereich des fachmännischen Handelns liegen. Bei der gezeigten Ausführungsform wird zwischen den zu koppelnden optischen Fasern ein Luftspalt vorgesehen, dessen Breite mit Hilfe der Rastelemente 7 und den entsprechenden Aussparungen 14 im Verbindungsstück 11 genau definiert wird.

Die Vorteile der erfindungsgemässen Ferrule sind dem Fachmann unmittelbar ersichtlich und sind insbesondere in der einfachen Handhabung und in der Wiederverwendbarkeit der Ferrulen zu sehen. Es versteht sich, dass die geometrische Ausbildung der erfindungsgemässen Ferrule und insbesondere die Anordnung der einzelnen Rastelemente im gewöhnlichen technischen Handeln des Fachmanns liegen. Die erfindungsgemässe Ferrule eignet sich insbesondere für die Kopplung von Kunststofffasern, welche mit ihrem Mantel fest verbunden sind. Es versteht sich, dass diese Ferrule aus einem Metall oder aus einem geeigneten Kunststoff gefertigt sein kann.

## Patentansprüche

1. Ferrule (1) zur Aufnahme eines Lichtwellenleiterkabels, mit einem Mantel (9) und einer für die Lichtwellenleitertechnik geeigneten optischen Faser, welche Ferrule (1) eine Ferrulenbasis (3) und einen Ferrulenkopf (2) aufweist, **dadurch gekennzeichnet, dass** zur stressfreien und lösbaren Fixierung der optischen Faser die Ferrulenbasis (3) mit einem Innengewinde (4) versehen ist, welches Innengewinde (4) formschlüssig auf den Mantel (9) der optischen Faser aufschraubbar ist.

2. Ferrule (1) nach Anspruch 1, **dadurch gekennzeichnet, dass** diese mindestens ein Rastelement (7) aufweist, welches geeignet ist die Positionierung der Ferrule (1) in longitudinaler Richtung in einem Verbindungsstück (11) zu gewährleisten.

3. Ferrule (1) nach Anspruch 1 oder 2, **dadurch gekennzeichnet, dass** zwischen der Ferrulenbasis (3) und dem Ferrulenkopf (2) ein Innenkonus (6) vorgesehen ist.

4. Ferrule (1) nach einem der Ansprüche 1 bis 3, **dadurch gekennzeichnet, dass** diese aus einem metallischen oder aus einem Kunststoffmaterial gefertigt ist.

5. Verwendung einer Ferrule gemäss Anspruch 1 zur Aufnahme eines Lichtwellenleiterkabels (9) mit einer optischen Kunststofffaser (POF).
